(19) Europäisches Patentamt European Patent Office Office européen des brevets

(11) **EP 4 488 636 A1**

(12) **EUROPÄISCHE PATENTANMELDUNG**

(43) Veröffentlichungstag:
08.01.2025 Patentblatt 2025/02

(21) Anmeldenummer: 24176722.7

(22) Anmeldetag: 17.05.2024

(51) Internationale Patentklassifikation (IPC):
*G01F 23/292* (2006.01)

(52) Gemeinsame Patentklassifikation (CPC):
**G01F 23/292**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: 07.07.2023 DE 102023118047

(71) Anmelder: emz-Hanauer GmbH & Co. KGaA
92507 Nabburg (DE)

(72) Erfinder:
• **Schade, Lukas**
  **92507 Nabburg (DE)**
• **Kleber, Johann**
  **92507 Nabburg (DE)**
• **Ruider, Veronika**
  **92507 Nabburg (DE)**

(74) Vertreter: **Hannke, Christian**
  **Hannke Bittner & Partner**
  **Patent- und Rechtsanwälte mbB**
  **Prüfeninger Straße 1**
  **93049 Regensburg (DE)**

(54) **SYSTEM ZUR AUFBEWAHRUNG VON FLÜSSIGKEITEN**

(57) Die Erfindung betrifft ein System zur Aufbewahrung von Flüssigkeiten, insbesondere für ein Haushaltsgerät, umfassend zumindest einen Container zum Aufbewahren einer Flüssigkeit und zumindest einer Füllstandsmessvorrichtung, wobei die Füllstandsmessvorrichtung zumindest eine Strahlungsquelleneinrichtung, welche elektromagnetische Strahlung emittiert und zumindest eine Detektionseinrichtung für elektromagnetische Strahlung umfasst, wobei der zumindest eine Container ein Reflexionselement aufweist, welches lediglich eine Grenzfläche mit einem in dem Container befindlichen Fluid aufweist.

Fig. 1

EP 4 488 636 A1

**Beschreibung**

Die Erfindung betrifft ein System zur Aufbewahrung von Flüssigkeiten, insbesondere für ein Haushaltsgerät, umfassend zumindest einen Container zum Aufbewahren einer Flüssigkeit und zumindest einer Füllstandsmessvorrichtung.

Viele Geräte und Vorrichtungen insbesondere Haushaltsgeräte umfassen Container zum Aufbewahren von diversen Flüssigkeiten. Ein entsprechendes Haushaltsgerät könnte ein wasserführendes Haushaltsgerät sein, beispielsweise ein Geschirrspüler oder eine Waschmaschine. In dem zumindest einen Container könnte Waschmittel, Klarspüler oder anderweitige Behandlungsmittel aufbewahrt werden. Denkbar wäre jedoch auch, dass der Container ein Aufbewahrungsmittel für Kondenswasser in einem Haushaltgerät, beispielsweise ein Kühlschank oder ein Trockner, ist. Es ist oftmals erwünscht, Informationen über den Füllstand derartigere Container zu erhalten. Derartige Informationen könnten hinsichtlich Anzeige einer Notwendigkeit einer Befüllung oder Entleerung verwendet werden.

Aufgabe der vorliegenden Erfindung besteht darin, ein System zur Aufbewahrung von Flüssigkeiten bereitzustellen, welches eine besonders einfache Füllstandsbestimmung ermöglicht.

Die Aufgabe wird gelöst durch den Gegenstand des Anspruchs 1. Die Unteransprüche umfassen bevorzugte Ausführungsformen.

Gemäß der vorliegenden Erfindung wird ein System zur Aufbewahrung von Flüssigkeiten, insbesondere für ein Haushaltsgerät bereitgestellt, umfassend zumindest einen Container zum Aufbewahren einer Flüssigkeit und zumindest einer Füllstandsmessvorrichtung, wobei die Füllstandsmessvorrichtung zumindest eine Strahlungsquelleneinrichtung, welche elektromagnetische Strahlung emittiert und zumindest eine Detektionseinrichtung für elektromagnetische Strahlung umfasst, wobei der zumindest eine Container ein Reflexionselement aufweist, welches lediglich eine Grenzfläche mit einem in dem Container befindlichen Fluid aufweist.

Trifft elektromagnetische Strahlung auf eine Grenzfläche zwischen Materialen mit unterschiedlichen Brechungsindex wird ein Teil der Strahlung reflektiert und ein Teil der Strahlung tritt in das angrenzende Material ein. Dieses Verhalten ist abhängig vom sogenannten Einfallswinkel oder elektromagnetischen Strahlung. In der Strahlenoptik bezeichnet der Einfallswinkel $\alpha$ die Ergänzung des Winkels zwischen Strahl und Horizont auf 90°. Wenn ein Strahl eine optische Grenzfläche durchläuft, ist sein Einfallswinkel jener zum Lot auf diese Fläche. Bei einem Einfallswinkel $\alpha$ größer als der sogenannte Grenzwinkel $\alpha_T$ tritt eine Totalreflexion der Strahlung auf. Die Strahlung wird somit vollständig reflektiert. Der Grenzwinkel $\alpha_T$ ist wie folgt definiert:

$$\sin \alpha_T = \frac{n_1}{n_2}$$

wobei $n_1$ und $n_2$ die Brechungsindizes der angrenzenden Materialien sind. Vorzugsweise ist vorliegend $n_1$ der Brechungsindex für Luft oder Fluid. Vorteilhafterweise ist der Brechungsindex von Luft $n_{Luft}$ kleiner als der Brechungsindex des Fluids $n_{Fluid}$ ($n_{Luft} < n_{Fluid}$). Vorzugsweise ist vorliegend $n_2$ der Brechungsindex für das Material des Reflexionselements. Vorzugsweise bestimmt sich der Grenzwinkel $\alpha_T$ der elektromagnetischen Strahlung von der zumindest einen Strahlungsquelleneinrichtung aus dem Brechungsindex n des Reflexionselements.

Vorzugsweises trifft die elektromagnetische Strahlung der zumindest einen Strahlungsquelleneinrichtung in einem vorbestimmten Einfallswinkel $\alpha$ oder einem vorbestimmten Einfallswinkelbereich auf die Grenzfläche. In einem vorteilhaften ersten Zustand des Systems ist der Container nicht mit der Flüssigkeit befüllt. Demnach ist das sich in dem Container befindliche Fluid vorzugsweise Luft. In dem ersten Zustand des Systems weist das Reflexionselement somit vorzugsweise eine Grenzfläche mit Luft auf. In einem vorteilhaften zweiten Zustand des Systems ist der Container mit der Flüssigkeit befüllt. Demnach ist das sich in dem Container befindliche Fluid vorzugsweise die entsprechende Flüssigkeit. In dem zweiten Zustand des Systems weist das Reflexionselement somit vorzugsweise eine Grenzfläche mit der entsprechenden Flüssigkeit auf. Vorzugsweise wird in dem ersten Zustand des Systems zumindest ein Anteil der elektromagnetischen Strahlung an der lediglich einen Grenzfläche totalreflektiert. Bevorzugt wird der reflektierte Anteil von der zumindest einen Detektionseinrichtung detektiert. Vorteilhafterweise erfolgt im zweiten Zustand keine Totalreflektion der zumindest einen Strahlungsquelleneinrichtung emittierten elektromagnetischen Strahlung von der lediglich einen Grenzfläche, bei dem vorgegebenen Einfallswinkel $\alpha$.

Bei dem erfindungsgemäßen System ist lediglich eine Grenzfläche mit einem in dem Container befindlichen Fluid vorgesehen, an welcher eine Totalreflektion stattfindet. Im Gegensatz zu sonst denkbaren Ausführungsformen mit zwei anliegenden und einen vorbestimmten Winkel einschließenden Grenzflächen erfordert das erfindungsgemäße System einen wesentlich geringeren Gestaltungsaufwand für den zumindest einen Container.

Nach einer bevorzugten Ausführungsform ist das Reflexionselement in oder an einer Außenwandung des zumindest einen Containers angeordnet. Bevorzugt ist die Grenzfläche des Reflexionselements planar ausgebildet. Eine planare Grenzfläche erstreckt sich flach oder eben ohne Wölbungen oder Ähnliches. Nach einer weiteren möglichen Ausgestaltung ist die Grenzfläche gewölbt, parabolisch oder als Kugelabschnitt ausgebildet ist. Nach einem weiteren Aspekt kann ein optisches Element in die Grenzfläche integriert sein. Ein solches optisches Element kann beispielsweise eine Linse sein. Vorteilhafterweise besteht das Reflexionselement aus einem für die von der zumindest einen Strahlungsquelleneinrichtung emittierten elektromagnetischen Strahlung transparenten Materials. Vorzugsweise besteht das Reflexionselement aus Glas oder einem Polymer, beispielsweise Polymethylmethacrylat (PMMA, auch Acrylglas). Das Reflexionselement kann vorzugsweise auch mehrere Abschnitte aufweisen, welche aus unterschiedlichen Materialien bestehen.

Nach einer weiteren bevorzugten Ausführungsform ist der zumindest eine Container ein Hohlkörper, der im Wesentlichen rechteckförmig oder quadratisch ausgestaltet ist. Denkbar wären jedoch auch weiter Formen, beispielsweise Körper mit einer polygonförmigen oder abgerundeten Grundfläche. Der Container erstreckt sich entlang einer Höhenachse Z, einer Längsachse X und einer Breitenachse Y. Befindet sich Flüssigkeit in dem Container, weist die Flüssigkeit einen Pegel, beziehungsweise eine obere Oberfläche auf. Dieser Pegel erstreckt sich im Wesentlichen innerhalb einer Ebene, welche durch die Längsachse X und die Breitenachse Y aufgespannt wird. Die Ausrichtung des Pegels hängt jedoch von dem Einbau des zumindest einen Container in beispielsweise einem Haushaltsgerät beziehungsweise von der Ausrichtung des Containers zu der wirkenden Gravitationskraft ab.

Nach einer weiteren bevorzugten Ausführungsform umfasst das Reflexionselement ein optisches Prisma. Vorteilhafterweise bildet eine erste Seitenfläche des optischen Prismas die lediglich eine Grenzfläche mit einem in dem Container befindlichen Fluid aus. Das Prisma kann ein beliebig ausgebildetes Prisma sein. Vorzugsweise ist die die Grenzfläche bildende erste Seitenfläche planar ausgebildet. Das Prisma kann vorzugsweise entlang seiner Unterbrechungen aufweisen. Das Prisma kann vorzugsweise optisch aktive Strukturen enthalten, beispielsweise Linsenelemente und/oder eine Oberflächenrauhigkeit zur Unterstützung der Streuung.

Nach einer bevorzugten Ausführungsform hat das optische Prisma ein gerades Prisma mit einem Dreieck als Grundfläche. Ein solches Prisma umfasst vorzugsweise eine erste, eine zweite und eine dritte Seitenfläche. Vorzugsweise tritt von der zumindest einen Strahlungsquelleneinrichtung emittierte elektromagnetische Strahlung durch eine zweite Seitenfläche des optischen Prismas in dieses ein und gelang zu der ersten Seitenfläche des optischen Prismas beziehungsweise der Grenzfläche. In einem ersten Zustand wird zumindest ein Anteil dieser elektromagnetischen Strahlung an der Grenzfläche totalreflektiert und tritt dann durch die dritte Seitenfläche aus dem optischen Prisma wieder aus. Von dort gelangt die reflektierte Strahlung vorteilhafterweise zu der zumindest einen Detektionseinrichtung.

Nach einer weiteren vorteilhaften Ausgestaltung ist das Reflexionselement derart an oder in der Außenwandung des zumindest einen Containers angeordnet, dass die Grenzfläche angestellt oder schräg zu einer fiktiven Ebene verläuft, welche parallel zu dem Pegel der Flüssigkeit ist. Vorzugsweise ist das Reflexionselement derart an oder in der Außenwandung des zumindest einen Containers angeordnet, dass die Grenzfläche einen Winkel θ mit einer fiktiven Ebene einschließt, welche parallel zu dem Pegel der Flüssigkeit ist. Vorzugsweise ist der Winkel θ kleiner als 180°.

Nach einer weiteren vorteilhaften Ausgestaltung ist das Reflexionselement derart an oder in der Außenwandung des zumindest einen Containers angeordnet, dass die Grenzfläche im Wesentlichen parallel zu einem Pegel der Flüssigkeit in dem Container ist. Vorteilhafterweise ist der Winkel θ im Wesentlichen gleich 180°. Vorzugsweise ist die erste Seitenfläche des optischen Prismas im Wesentlichen parallel zu dem Pegel der Flüssigkeit angeordnet.

Nach einer bevorzugten Ausführungsform umfasst das Reflexionselement ein Fensterelement, welches wiederum die Grenzfläche umfasst. Vorzugsweise ist das Fensterelement in einer Außenwandung des zumindest einen Containers integriert. Das Fensterelement kann planar, gewölbt, parabolisch oder als Kugelabschnitt ausgebildet sein.

Nach einer weiteren vorteilhaften Ausführungsform umfasst die Strahlungsquelleneinrichtung zumindest eine Strahlungsquelle. Vorzugsweise ist die zumindest eine Strahlungsquelle eine LED, ein Laser, oder eine Laser-LED. Denkbar wären selbstverständlich auch noch weitere geeignete Strahlungsquellen. Vorzugsweise weist die von der Strahlungsquelleneinrichtung emittierte elektromagnetische Strahlung eine Wellenlänge λ in einem Bereich zwischen ca. 300 nm bis ca. 1400nm. Vorzugsweise ist die von der zumindest einen Strahlungsquelleneinrichtung emittierte elektromagnetische Strahlung polarisiert. Vorzugsweise ist die elektromagnetische Strahlung linear, zirkular oder elliptisch polarisiert. Vorzugsweise emittiert die zumindest eine Strahlungsquelle bereits die polarisiert elektromagnetische Strahlung. Alternativ kann die Strahlungsquelleneinrichtung zumindest einen Polarisator umfassen. Nach einer weiteren bevorzugten Ausführungsform ist die von der zumindest einen Strahlungsquelleneinrichtung emittierte elektromagnetische Strahlung unpolarisiert. Dabei würde zwar die Reflektivität unterhalb des Grenzwinkels abhängig von den Polarisationsrichtungen sein, jedoch ist der Grenzwinkel für die unterschiedlichen Polarisationswinkel gleich.

Vorzugsweise umfasst das zumindest eine Detektionselement zumindest ein Sensorelement. Ein solches Sensorelement ist vorzugsweise geeignet und dafür vorgesehen elektromagnetische Strahlung zu detektieren. Ein solches Sensorelement kann beispielsweise ein Phototransistor sein.

Nach einer weiteren vorteilhaften Ausführungsform sind die zumindest eine Strahlungsquelleneinrichtung und die zumindest eine Detektionseinrichtung auf einer gemeinsamen Trägereinrichtung angeordnet. Vorzugsweise umfasst die Trägereinrichtung zumindest ein plattenartiges Element. Vorzugsweise ist das plattenartige Element eine Platine beziehungsweise eine Leiterplatte oder PCB (Printed Circuit Board). Denkbar wäre, dass die Trägereinrichtung ein Gehäuse umfasst, in welchem das zumindest eine plattenartige Element angeordnet ist.

Nach einer weiteren vorteilhaften Ausführungsform ist der zumindest einen Strahlungsquelleneinrichtung und der zumindest einen Detektionsrichtung eine zentrale Strahlrichtung zugeordnet. Die zumindest eine Strahlungsquelleneinrichtung weist einen Emissionswinkel $\beta_E$ auf. Der Emissionswinkel $\beta_E$ beschreibt den Bereich, in welchem sich die elektromagnetische Strahlung, ausgehend von der zumindest einen Strahlungsquelleneinrichtung ausbreitet. Vorzugsweise ist die Emission der zumindest eine Strahlungsquelleneinrichtung innerhalb des Emissionswinkels nicht isotrop verteilt. Im Falle einer Strahlungsquelleneinrichtung in Form einer LED sind vielfältige Abstrahlverhalten möglich. Derartige Abstrahlverhalten können keulenartig sein, eine sogenannte eine Batwing- Charakteristik aufweisen oder eine Side-Emitter-Charakteristik aufweisen. Selbstverständlich sich auch anderweitige Charakteristiken denkbar. Vorzugsweise weist die zumindest eine Detektionseinrichtung einen Akzeptanzwinkel $\beta a$, auf. Der Akzeptanzwinkel $\beta a$, beschreibt den Bereich, in welchem sich die elektromagnetische Strahlung zu der zumindest einen Detektionseinrichtung hin ausbreitet. Vorzugsweise ist die Detektionseffizienz der zumindest einen Detektionseinrichtung innerhalb des Akzeptanzwinkels nicht isotrop. Die zentrale Strahlrichtung der zumindest einen Detektionseinrichtung würde demnach entlang der mittleren Höhenachse des genannten Kegels sich erstrecken.

Vorzugsweise erstreckt sich die zentrale Strahlrichtung der zumindest einen Strahlungsquelleneinrichtung und/oder die zentrale Strahlrichtung der zumindest einen Detektionseinrichtung nicht senkrecht zu dem plattenartigen Element der Trägereinrichtung. Eine zentrale Strahlrichtung der zumindest einen Strahlungsquelleneinrichtung, welche nicht senkrecht zu dem plattenartigen Element der Trägereinrichtung ausgebildet ist, kann vorzugsweise durch zumindest eine Strahlungsquelleneinrichtung ermöglicht werden, welche zumindest eine Strahlungsquelle aufweist, die als ein Bauteil mit gebogenen Drahtanschlüssen ausgebildet ist. Alternativ oder kumulativ kann die zumindest eine Strahlungsquelle eine SMD-LED (Surface mounted-LED) mit einer verkippten optischen Achse, oder eine SideLooker-LED sein.

Eine zentrale Strahlrichtung der zumindest einen Detektionseinrichtung nicht senkrecht zu dem plattenartigen Element der Trägereinrichtung kann vorzugsweise durch zumindest eine Detektionseinrichtung ermöglicht werden, welche ein Sensorelement aufweist, das als ein Bauteil mit gebogenen Drahtanschlüssen ausgebildet ist. Vorzugsweise sind die genannten Drahtanschlüsse der Strahlungsquelle und/oder des Sensorelements mittels einer Durchsteckmontage (auch through-hole technolog THT genannt) an der Platine angeordnet.

Nach einer weiteren bevorzugten Ausführungsform umfasst die Trägereinrichtung eine gebogene Platine. Vorzugsweise ist die eine derart gebogene Platine mechanisch stabil. Nach einem weiteren Aspekt könnte die Trägereinrichtung eine flexible Platine umfassen. Vorzugsweise weist die Platine einen ersten Abschnitt auf, auf oder an welchem die zumindest eine Strahlungsquelleneinrichtung angeordnet ist. Weiterhin ist es vorteilhaft, dass die Platine einen zweiten Abschnitt aufweist, auf oder an welchem die zumindest eine Detektionseinrichtung angeordnet ist. Vorzugsweise schließen der erste Abschnitt und der zweite Abschnitt einen Winkel $\gamma$ ein. Bevorzugt ist der Winkel $\gamma$ kleiner als 180°. Eine derartige vorteilhafte Ausgestaltung mit den zwei Abschnitten, welche den Winkel $\gamma$ einschließen kann durch eine gebogene Platine oder eine flexible Platine ermöglicht werden.

Nach einer weiteren bevorzugten Ausführungsform weist die zumindest eine Strahlungsquelleneinrichtung einen Emissionswinkel $\beta_E$ und die zumindest eine Detektionseinrichtung einen Akzeptanzwinkel $\beta a$, auf. Vorzugsweise ist die zumindest eine Strahlungsquelleneinrichtung derart relativ zu der Grenzfläche angeordnet ist, dass zumindest ein Teil der elektromagnetischen Strahlung innerhalb des Emissionswinkels $\beta_E$ auf die Grenzfläche trifft. Vorzugsweise ist die zumindest eine Detektionseinrichtung derart relativ zu der Grenzfläche angeordnet, dass zumindest ein Teil der reflektierten, elektromagnetischen Strahlung innerhalb des Akzeptanzwinkels $\beta a$, liegt.

Nach einer weiteren bevorzugten Ausführungsform ist die zumindest eine Strahlungsquelleneinrichtung derart relativ zu der Grenzfläche angeordnet, dass lediglich ein Teil der elektromagnetischen Strahlung innerhalb des Emissionswinkels $\beta_E$ auf die Grenzfläche trifft. Vorzugsweise weist die zumindest eine Strahlungsquelleneinrichtung einen großen Emissionswinkel $\beta_E$ auf. Bevorzugt ist die zumindest eine Strahlungsquelleneinrichtung annähernd ein Lambert Strahler. Vorzugsweise weist die zumindest eine Strahlungsquelleneinrichtung zumindest eine Strahlungsquelle auf, welche annähernd ein Lambert Strahler ist. Ein Lambert Strahler folgt dem Lambertschen Kosinusgesetz, welches besagt, dass eine Strahlstärke die aus einem Winkel $\theta_L$ (relativ zur Oberflächennormalen) beobachtet wird, proportional zu $\cos(\theta_L)$ ist. Vorzugsweise ist die Emission der zumindest eine Strahlungsquelleneinrichtung innerhalb des Emissionswinkels nicht isotrop verteilt. Durch eine derartige Ausgestaltung kann die zumindest eine Strahlungsquelleneinrichtung derart an der Platine befestigt werden, dass diese im Wesentlichen parallel zu der Platine ist. Vorzugsweise ist der Anteil der elektromagnetischen Strahlung, der auf die Grenzfläche auftrifft ausreichend, um eine hinreichende Detektion zu ermöglichen.

Vorzugsweise ist die zumindest eine Detektionseinrichtung derart relativ zu der Grenzfläche angeordnet, dass lediglich ein Teil der reflektierten, elektromagnetischen Strahlung innerhalb des Akzeptanzwinkels βa, liegt. Vorzugsweise weist zumindest eine Detektionseinrichtung einen großen Akzeptanzwinkel $\beta_A$, auf. Vorzugsweise ist zumindest eine Detektionseinrichtung annähernd ein Lambert Detektor. Ein solcher Lambert Detektor ist analog zu definieren, wie der oben beschriebenen Lambert Strahler. Vorzugsweise weist die zumindest eine zumindest ein Sensorelement auf, welches annähernd ein Lambert Detektor ist. Durch eine derartige Ausgestaltung kann die zumindest eine Detektionseinrichtung derart an der Platine befestigt werden, dass dies im Wesentlichen parallel zu der Platine ist. Vorzugsweise ist der Anteil der elektromagnetischen Strahlung, der auf die zumindest eine Detektionseinrichtung auftrifft ausreichend, um eine hinreichende Detektion zu ermöglichen.

Vorzugsweise ist sowohl die zumindest eine Strahlungsquelleneinrichtung annähernd ein Lambert Strahler ist und die zumindest eine Detektionseinrichtung annähernd ein Lambert Detektor.

Vorzugsweise ist der halbe Emissionswinkel ($\beta_E$) größer oder gleich 45°. Bevorzugt ist der halbe Akzeptanzwinkel ($\beta_A$) größer oder gleich 45°. Dabei sind vorteilhafterweise Emissionswinkel ($\beta_E$) und der Akzeptanzwinkel ($\beta_A$) analog zu der Definition des Öffnungswinkels bei der Definition der numerischen Apertur zu verstehen. Ein solcher Öffnungswinkel eines optischen Systems entspricht vorzugsweise dem maximal möglichen Winkel eines Lichtbündels, das vom scharf gestellten Objekt ausgeht und vom Objektiv gerade noch aufgenommen wird. Der Öffnungswinkel gibt an, wie groß der maximale Lichtkegel ist, der vom Objekt ausgehend vom Objektiv aufgenommen wird.

Nach einer weiteren bevorzugten Ausführungsform ist zumindest eine erste Blendeneinrichtung vorgesehen, welche die auf die Grenzfläche gerichtete elektromagnetische Strahlung räumlich begrenzt. Vorzugsweise ist zumindest eine zweite Blendeneinrichtung vorgesehen, welche die reflektierte elektromagnetische Strahlung räumlich begrenzt. Denkbar wäre auch, dass zumindest eine dritte Blendeneinrichtung vorgesehen ist, welche sowohl die auf die Grenzfläche gerichtete elektromagnetische Strahlung räumlich begrenzt, als auch die die reflektierte elektromagnetische Strahlung räumlich begrenzt. Vorzugsweise ist die zumindest eine erste Blendeneinrichtung und/oder die zumindest eine zweite Blendeneinrichtung und/oder die zumindest eine dritte Blendeneinrichtung als eine Lochblende oder eine Schlitzblende ausgebildet. Bei einer Verwendung einer Strahlungsquelleneinrichtung mit einem großen Emissionswinkel $\beta_E$ kann somit eine Bestrahlung an unerwünschten Bereichen verhindert werden. Ebenso kann eine unerwünschte Bestrahlung durch die reflektierte Strahlung vermieden werden.

Nach einer weiteren bevorzugten Ausführungsform ist zwischen der zumindest einen Strahlungsquelleneinrichtung und der Grenzfläche ein erstes Fensterelement angeordnet. Vorzugsweise ist zwischen der Grenzfläche und der zumindest einen Detektionseinrichtung ein zweites Fensterelement angeordnet.

Nach einer weiteren bevorzugten Ausführungsform ist auf oder nahe der zumindest einen Strahlungsquelleneinrichtung ein erstes optisches Element angeordnet. Vorzugsweise ist auf oder nahe der zumindest einen Detektionseinrichtung ein zweites optisches Element angeordnet. Vorteilhafterweise ist das erste optische Element und/oder das zweite optische Element ein Prisma oder eine Linse.

Nach einer weiteren vorteilhaften Ausführungsform ist zumindest eine Strahlungsleitungseinrichtung vorgesehen. Vorzugsweise wird die elektromagnetische Strahlung der zumindest einen Strahlungsquelleneinrichtung abschnittsweise in der Strahlungsleitungseinrichtung geleitet. Bevorzugt wird die an der Grenzfläche reflektierte elektromagnetische Strahlung abschnittsweise in der Strahlungsleitungseinrichtung geleitet. Vorzugsweise ist die Strahlungsquelleneinrichtung stabförmig ausgebildet und umfasst ein abgeschrägtes distales Ende. Vorzugsweise wird an dem ein abgeschrägtes distales Ende die durch die Strahlungsquelleneinrichtung getretene elektromagnetische Strahlung totalreflektiert und zu der Grenzfläche umgeleitet. Vorzugsweise wird an dem ein abgeschrägtes distales Ende die an der Grenzfläche reflektierte elektromagnetische Strahlung totalreflektiert und in die Strahlungsquelleneinrichtung geleitet.

Nach einer weiteren vorteilhaften Ausführungsform ist eine Mehrzahl von Containern zum Aufbewahren einer Flüssigkeit vorgesehen. Vorteilhafterweise ist lediglich eine Strahlungsquelleneinrichtung vorgesehen. Bevorzugt ist eine Mehrzahl von Strahlungsleitungseinrichtungen vorgesehen, welche elektromagnetische Strahlung der Strahlungsquelleneinrichtung zu den jeweiligen Grenzflächen der Container leiten. Vorteilhafterweise ist eine Mehrzahl an Detektionseinrichtungen vorgesehen. Bevorzugt ist jedem Container eine Detektionseinrichtung zugeordnet.

Es versteht sich, dass die oben angeführten Ausführungsformen beliebig kombinierbar sind. So kann die zumindest eine Strahlungsquelleneinrichtung einer Ausführungsform mit der zumindest einen Detektionseinrichtung einer anderen Ausführungsform kombiniert werden.

Die Aufgabe wird auch durch ein Haushaltsgerät mit einem System zur Aufbewahrung von Flüssigkeiten gelöst. Das Haushaltsgerät kann dabei mit allen bereits obig im Rahmen des Systems beschriebenen Merkmalen einzeln oder in Kombination miteinander ausgestattet sein und umgekehrt.

Nach einer besonders bevorzugten Ausführungsform ist das System zur Aufbewahrung von Flüssigkeiten Teil einer Dosierungsvorrichtung. Vorzugsweise ist das Haushaltsgerät ein wasserführendes Haushaltsgerät, beispielsweise ein Geschirrspüler oder eine Waschmaschine. Vorzugsweise ist die in dem zumindest einem Container aufbewahrte Flüssigkeit ein Behandlungsmittel beispielsweise ein Waschmittel, ein Spülmittel, ein Klarspüler, ein Weichspüler oder Ähnliches. Vorzugsweise ist der zumindest eine Container aus der Dosierungsvorrichtung entnehmbar.

Vorzugsweise ist das Haushaltsgerät ein Trockner, wobei in dem Container das Kondenswasser des Trockners aufbewahrt wird. Durch System zur Aufbewahrung von Flüssigkeiten kann beispielsweise festgestellt werden, dass ein der Container zu entleeren ist.

Weitere Vorteile, Ziele und Eigenschaften der vorliegenden Erfindung werden anhand nachfolgender Beschreibung der anliegenden Figuren erläutert. Gleichartige Komponenten können in den verschiedenen Ausführungsformen gleiche Bezugszeichen aufweisen.

In den Figuren zeigen:

Fig. 1     eine Seitenansicht des Systems nach einer Ausführungsform;

Fig.2     eine perspektivische Ansicht des Systems nach einer Ausführungsform;

Fig.3     eine Seitenansicht des Systems nach einer Ausführungsform;

Fig.4     eine perspektivische Ansicht des Systems nach einer Ausführungsform;

Fig.5     ein Ausschnitt einer Anordnung des Systems nach einer Ausführungsform;

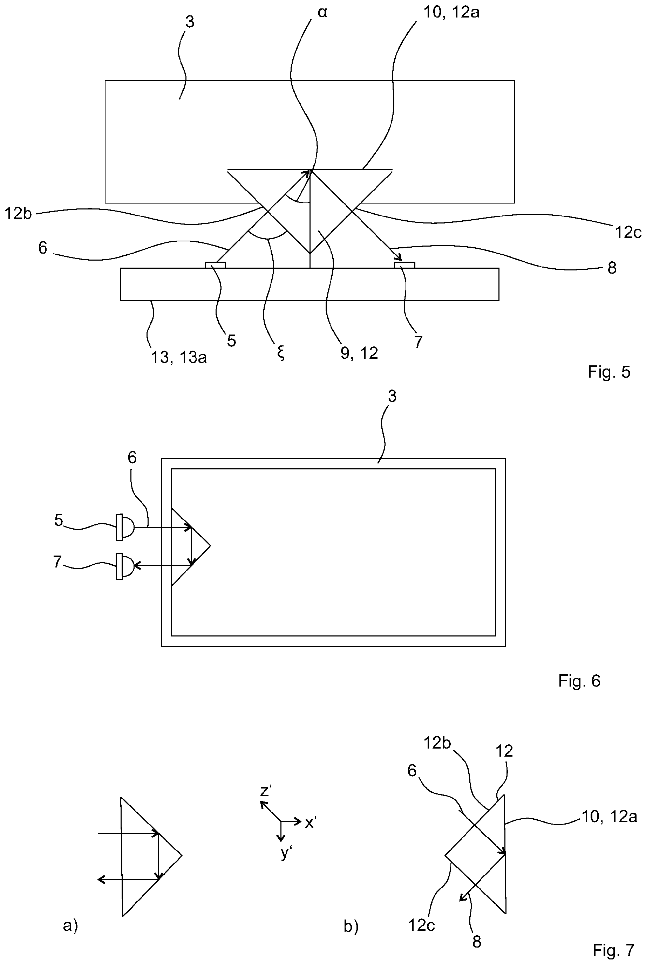

Fig.5     ein Ausschnitt einer Anordnung des Systems nach einer Ausführungsform;

Fig. 6     eine System nach einer unvorteilhaften Ausgestaltung;

Fig 7     eine schematische Gegenüberstellung einer unvorteilhaften und einer vorteilhaften Ausgestaltung;

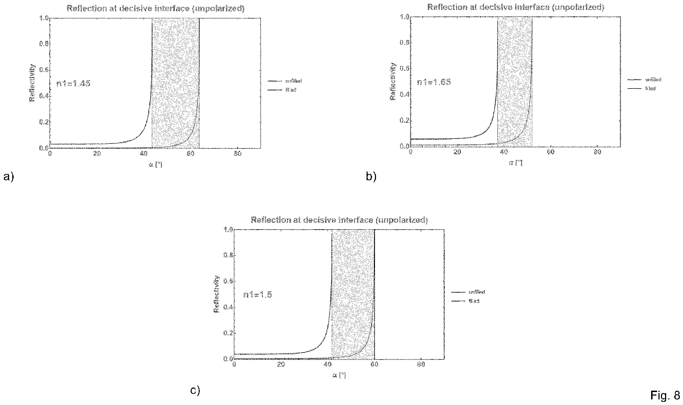

Fig 8     Messkurven der Reflektivität in Abhängigkeit von dem Einstrahlwinkel;

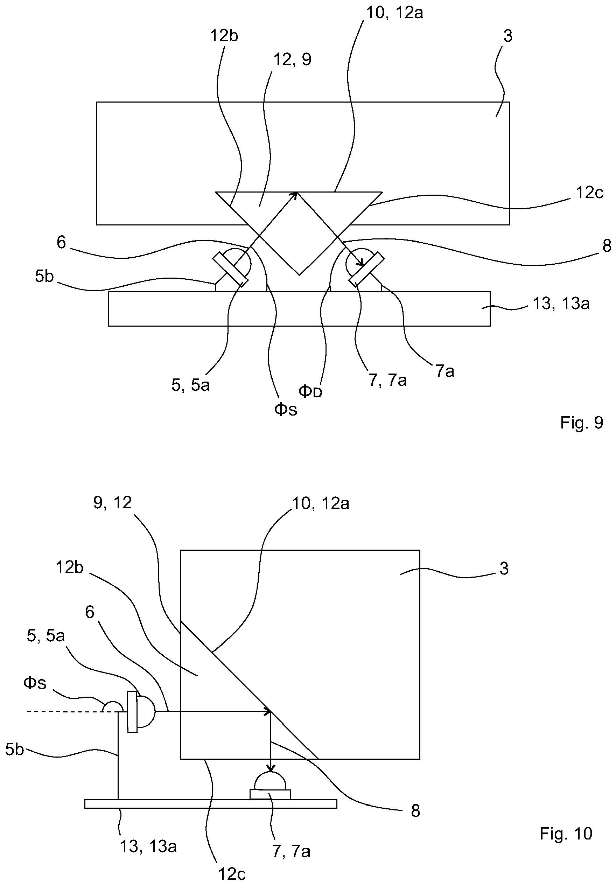

Fig.9     ein Ausschnitt einer Anordnung des Systems nach einer weiteren Ausführungsform;

Fig.10     ein Ausschnitt einer Anordnung des Systems nach einer weiteren Ausführungsform;

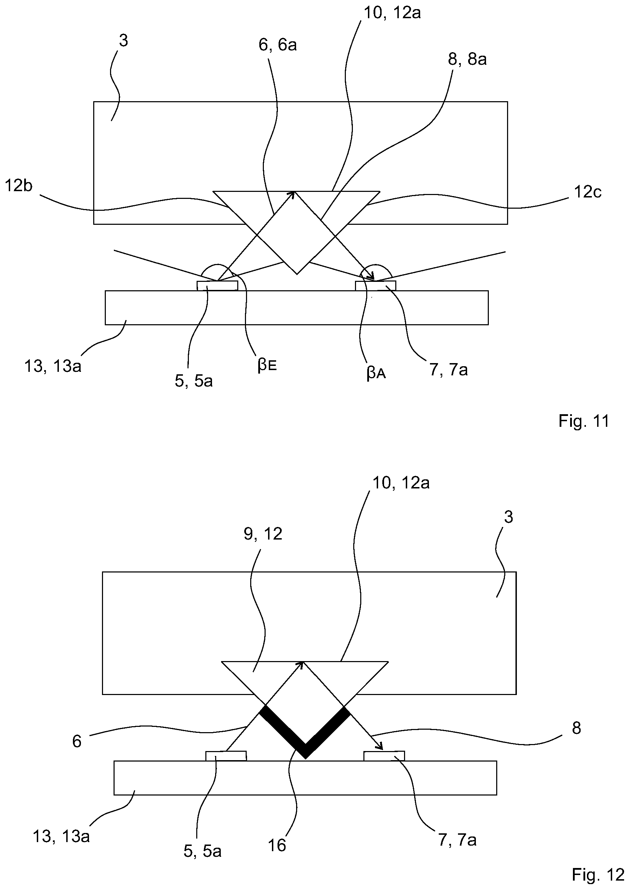

Fig.11     ein Ausschnitt einer Anordnung des Systems nach einer weiteren Ausführungsform;

Fig.12     ein Ausschnitt einer Anordnung des Systems nach einer weiteren Ausführungsform;

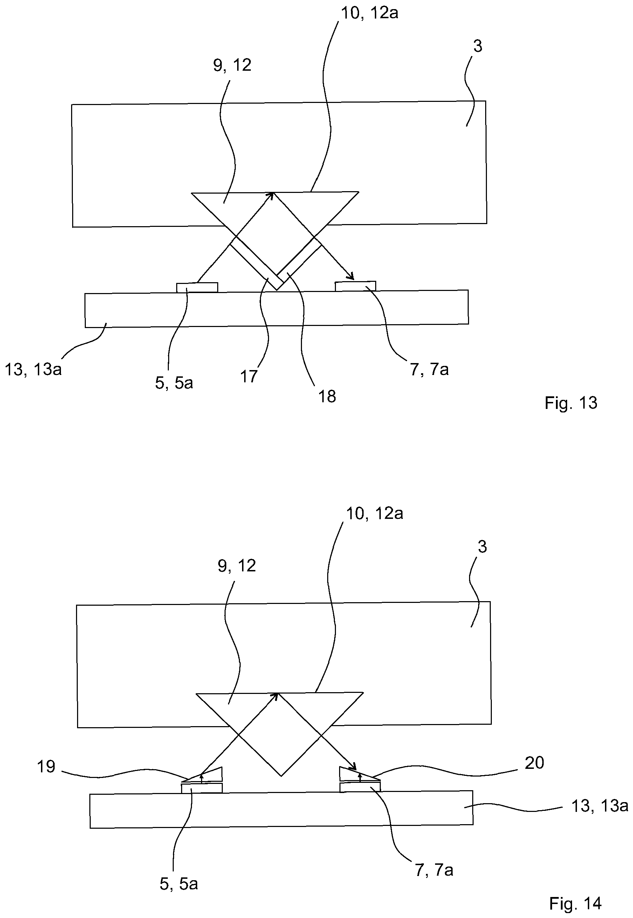

Fig.13     ein Ausschnitt einer Anordnung des Systems nach einer weiteren Ausführungsform;

Fig.14     ein Ausschnitt einer Anordnung des Systems nach einer weiteren Ausführungsform;

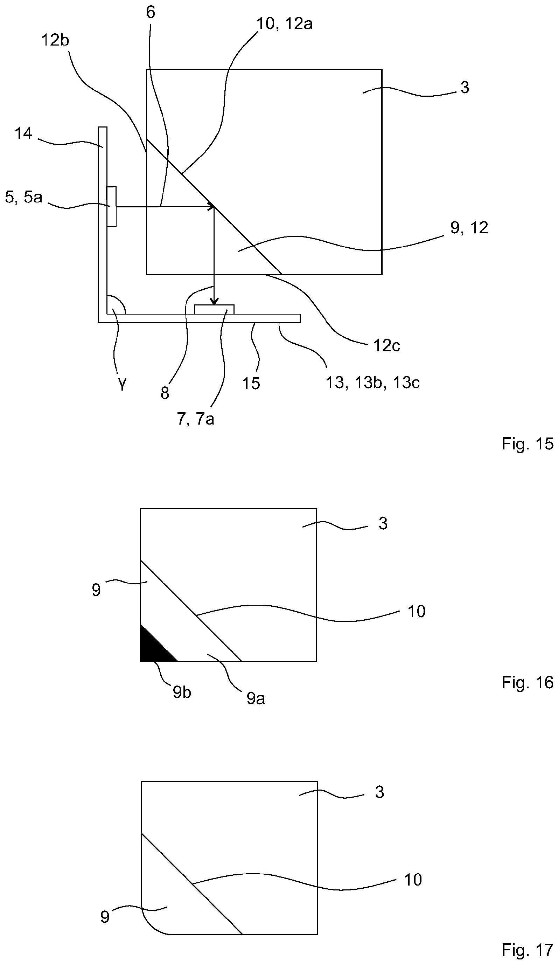

Fig.15     ein Ausschnitt einer Anordnung des Systems nach einer weiteren Ausführungsform;

Fig.16     ein Ausschnitt einer Anordnung des Systems nach einer weiteren Ausführungsform;

Fig.17     ein Ausschnitt einer Anordnung des Systems nach einer weiteren Ausführungsform;

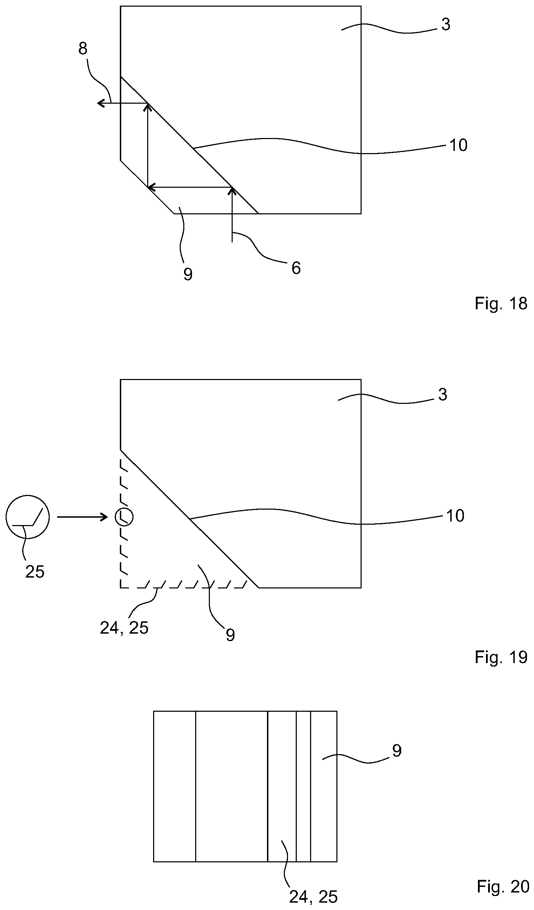

Fig.18     ein Ausschnitt einer Anordnung des Systems nach einer weiteren Ausführungsform;

Fig.19     ein Ausschnitt einer Anordnung des Systems nach einer weiteren Ausführungsform;

Fig.20     ein Ausschnitt einer Anordnung des Systems nach einer weiteren Ausführungsform;

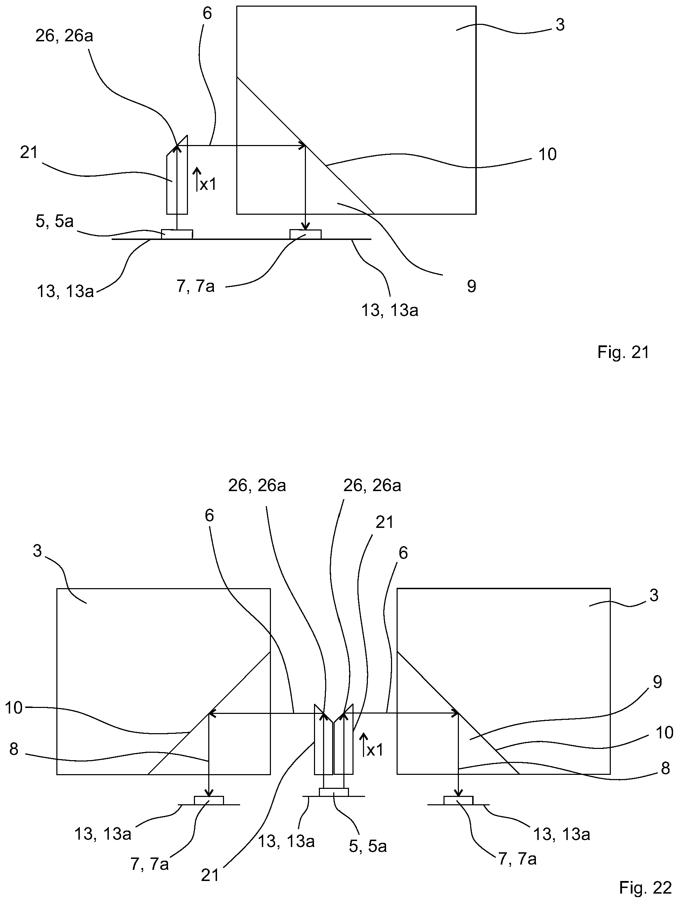

Fig.21     ein Ausschnitt einer Anordnung des Systems nach einer weiteren Ausführungsform;

Fig.22     ein Ausschnitt einer Anordnung des Systems nach einer weiteren Ausführungsform;

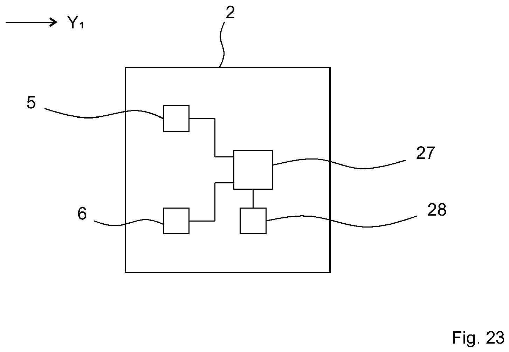

Fig.23     eine Prinzipschaltskizze eines Haushaltsgeräts nach einer Ausführungsform;

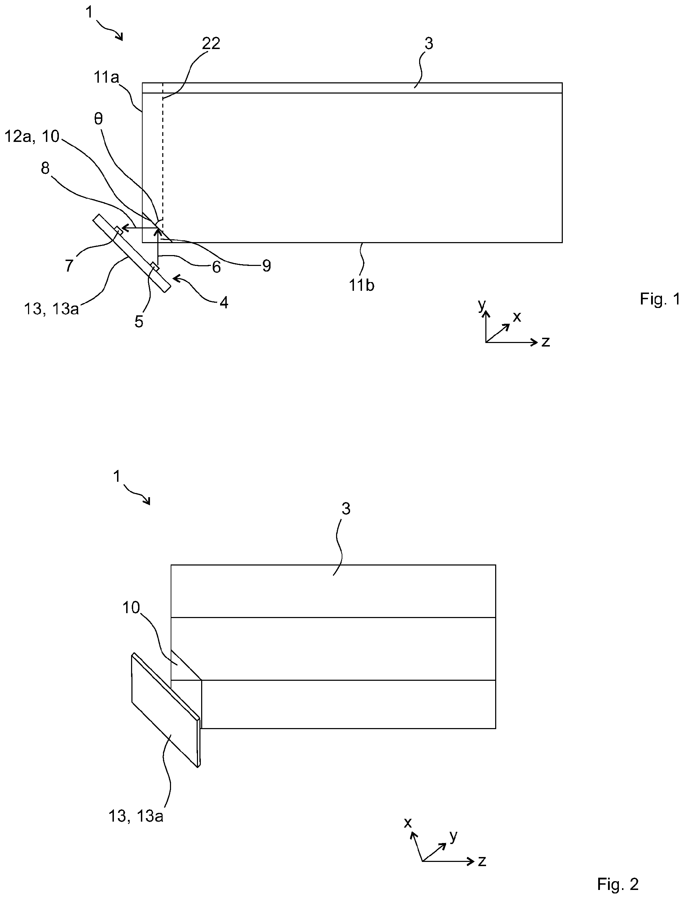

In den Figuren 1-5 und 9 -22 wird ein System 1 zur Aufbewahrung von Flüssigkeiten, insbesondere für ein Haushaltsgerät 2 gezeigt. Das System 1 umfasst zumindest einen Container 3 zum Aufbewahren einer Flüssigkeit und zumindest einer Füllstandsmessvorrichtung 4, wobei die Füllstandsmessvorrichtung 4 zumindest eine Strahlungsquelleneinrichtung 5, welche elektromagnetische Strahlung 6 emittiert und zumindest eine Detektionseinrichtung 7 für elektromagnetische Strahlung 8 umfasst, wobei der zumindest eine Container 3 ein Reflexionselement 9 aufweist, welches lediglich eine Grenzfläche 10 mit einem in dem Container 3 befindlichen Fluid aufweist.

Der zumindest eine Container 3 erstreckt sich entlang einer Höhenachse Z, einer Längsachse X und einer Breitenachse Y. Der Container 3 ist ein Hohlköper, der im Wesentlichen rechteckförmig oder quadratisch ausgestaltet ist. Denkbar wären jedoch auch weiter Formen, beispielsweise Körper mit einer polygonförmigen oder abgerundeten Grundfläche. Der Container 3 umfasst weiterhin eine Außenwandung 11. Befindet sich Flüssigkeit in dem Container 3, weist die Flüssigkeit einen Pegel, beziehungsweise eine obere Oberfläche auf. Dieser Pegel erstreckt sich im Wesentlichen innerhalb einer Ebene, welche durch die Längsachse X und die Breitenachse Y aufgespannt wird.

Das Reflexionselement 9 ist in oder an einer Außenwandung 11 des zumindest einen Containers 3 angeordnet. Die Grenzfläche 10 kann planar, gewölbt, parabolisch oder als Kugelabschnitt ausgebildet sein. Nach einer vorteilhaften Ausführungsform kann auch ein optisches Element in die Grenzfläche 10 integriert sein. Das Reflexionselement 6 kann weiterhin aus Glas oder oder einem Polymer bestehen.

Die elektromagnetischen Strahlung 6 der zumindest einen Strahlungsquelleneinrichtung 5 trifft in einem vorbestimmten Einfallswinkel $\alpha$ oder einen vorbestimmten Einfallswinkelbereich auf die Grenzfläche 10. In einem ersten Zustand des Systems ist der Container 3 nicht mit der Flüssigkeit befüllt. Die Grenzfläche liegt somit an dem Fluid Luft. Es gibt demnach einen Übergang von dem Material des Reflexionselements 9, beispielsweise Glas oder Plexiglas zu Luft. Durch einen solchen Übergang wird in dem ersten Zustand des Systems zumindest ein Anteil der elektromagnetischen Strahlung 6, welche unter einem vorgegebenen Einfallswinkel α auf die Grenzfläche trifft, an der lediglich einen Grenzfläche 10 totalreflektiert. Die reflektierte elektromagnetische Strahlung 8 wird dann von der zumindest einen Detektionseinrichtung 7 detektiert. In einem zweiten Zustand des Systems ist der Container 3 mit der Flüssigkeit befüllt. Im zweiten Zustand des Systems gibt es demnach einen Übergang von dem Material des Reflexionselements 9, beispielsweise Glas oder Plexiglas zu der Flüssigkeit. Durch einen solchen Übergang erfolgt keine Totalreflektion der elektromagnetischen Strahlung 6 an der lediglich einen Grenzfläche 10 bei dem vorgegebenen Einfallswinkel α. Ein solches Ausbleiben einer Totalreflektion bei dem vorgegebenen Einfallswinkel α ist ebenso durch die zumindest einen Detektionseinrichtung 7 detektierbar. Die Grenzfläche 10 kann auch als optisch aktive Fläche bezeichnet werden.

Das Reflexionselement 9 umfasst ein optisches Prisma 12. Dabei bildet eine erste Seitenfläche 12a des optischen Prismas 12 die lediglich eine Grenzfläche 10 mit einem in dem Container 3 befindlichen Fluid aus. Das Prisma kann grundlegend verschiedene Formen aufweisen, im Folgenden wird, ohne Beschränkung der Allgemeinheit sich auf ein gerades Prisma mit einem Dreieck als Grundfläche bezogen. Die emittierte elektromagnetische Strahlung 6 tritt durch eine zweite Seitenfläche 12b in das Prisma 12 und gelangt zu der Grenzfläche 10 beziehungsweise der ersten Seitenfläche 12a. Befindet sich das System in dem ersten Zustand, wird die elektromagnetische Strahlung 6 an der Grenzfläche 10 totalreflektiert und tritt dann durch die dritte Seitenfläche 12c als reflektierte elektromagnetische Strahlung 8 aus dem Prisma 12 aus.

Die Strahlungsquelleneinrichtung 5 umfasst zumindest eine Strahlungsquelle 5a. Dabei kann die zumindest eine Strahlungsquelle 5a eine LED, ein Laser, oder eine Superlumineszenzdiode (SLED) sein.

Die zumindest eine Strahlungsquelleneinrichtung 5 und die zumindest eine Detektionseinrichtung 7 sind auf einer gemeinsamen Trägereinrichtung 13 angeordnet. Die Trägereinrichtung 13 umfasst dabei ein plattenartiges Element 13a beziehungsweise eine Platine (PCB), auf welchem die zumindest eine Strahlungsquelleneinrichtung 5 und die zumindest eine Detektionseinrichtung 7 befestigt sind. Denkbar wäre, dass die Trägereinrichtung 13 ein Gehäuse (nicht in den Figuren gezeigt) umfasst, in welchem das zumindest eine plattenartige Element 13a angeordnet ist.

In Figur 6 ist eine Ausführungsform gezeigt, welche als unvorteilhaft angesehen wird. Nach dieser Ausführungsform existieren zwei Grenzflächen mit dem Fluid, welches Luft oder die Flüssigkeit sein kann, in dem Container 3. Die einfallende elektromagnetische Strahlung 6 wird an der ersten Grenzfläche zu der zweiten Grenzfläche reflektiert. Von der zweiten Grenzfläche wird die elektromagnetische Strahlung dann zu der Detektionseinrichtung reflektiert. Die vorliegend beanspruchte Erfindung weist jedoch lediglich eine Grenzfläche zu dem sich in dem Container befindlichen Fluid auf. Die erfindungsgemäße Ausführungsform hat den Vorteil, dass eine baulich einfachere Konstruktion des Containers ermöglicht wird. Die Geometrie des Containers kann vereinfacht werden. Bei nachteiligen komplizierteren inneren Strukturen der Container kann die gelagerte Flüssigkeit nach dem Entleeren leichter auf den Oberflächen verbleiben. Der Grund dafür ist die Oberflächenspannung an Kanten mit einem Winkel <180°. In Figur 7 ist die nicht vorteilhafte Ausführungsform unter a) der erfindungsgemäßen Ausführungsform b) gegenübergestellt. Die erfindungsgemäße Ausführungsform weist im Gegensatz zu der nicht vorteilhaften Ausführungsform weitere Vorteile hinsichtlich der Toleranzen auf. Die nicht vorteilhafte Ausführungsform a) hat translatorische Toleranzen X'=0, Y'=2X und Z=0. Im Gegensatz dazu hat die erfindungsgemäße Ausführungsform b) translatorische Toleranzen X'=1,41 (sqrt2), Y'=2X und Z=0. Die nicht vorteilhafte Ausführungsform a) hat Winkel-Toleranzen X'=4X', Y'=4X' und Z=4X'. Im Gegensatz dazu hat die erfindungsgemäße Ausführungsform b) Winkel Toleranzen X'=2X', Y'=2X' und Z=2X'. Die erfindungsgemäße Ausführungsform weist somit besser translatorische Toleranzen und bessere Winkel-Toleranzen auf, da lediglich an einer Grenzfläche eine Totalreflektion stattfindet.

In den Figuren 1 und 2 ist eine Ausführungsform des Systems gezeigt, wobei Figur 1 eine Seitenansicht ist und Figur 2 eine perspektivische Ansicht ist. Aus diesen Figuren ist zu erkennen, dass das Reflexionselement 9, beispielsweise ein Prisma 12 derart in oder an der Außenwandung 11 des zumindest einen Containers 3 angeordnet ist, dass die Grenzfläche 10 angestellt oder schräg zu einer fiktiven Ebene 22 verläuft, welche parallel zu dem Pegel der Flüssigkeit ist. Die Grenzfläche 10 und die fiktive Ebene 22 schließen somit einen Winkel θ ein, der kleiner als 180° ist. Die Grenzfläche 10 erstreckt sich schräg zwischen einer unteren Außenwandung 11a und einer seitlichen Außenwandung 11b. Die Grenzfläche 10 ist somit im Wesentlichen seitlich am unteren Bereich des Containers angeordnet. Aus der Figur ist gut ersichtlich, dass durch den Verlauf der Grenzfläche 10 ein Eckabschnitt des Containers durch das Reflexionselement 9 ersetzt worden ist. Die Platine 13a, auf welcher die zumindest eine Strahlungsquelleneinrichtung 5 und die zumindest eine Detektionseinrichtung 7 angeordnet sind ist im Wesentlichen parallel zu der Grenzfläche 10 angeordnet.

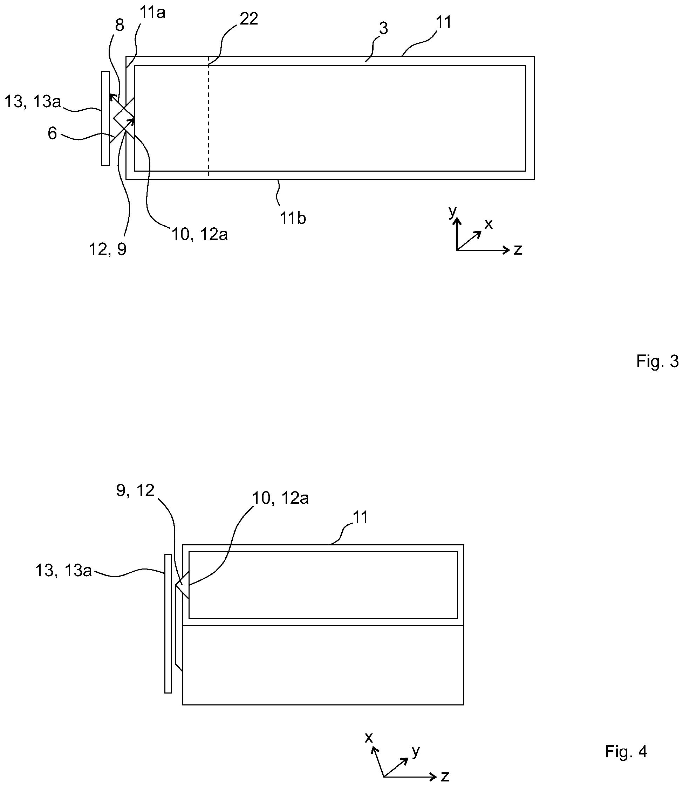

In den Figuren 3 und 4 ist eine weitere Ausführungsform des Systems gezeigt, wobei Figur 3 eine Seitenansicht ist und Figur 4 eine perspektivische Ansicht ist. Aus diesen Figuren ist zu erkennen, dass das Reflexionselement 9, beispielsweise ein Prisma 12 derart an oder in dem Container 2 angeordnet ist, dass die Grenzfläche 10 im Wesentlichen parallel zu einer fiktiven Ebene 22 verläuft, welche parallel zu dem Pegel der Flüssigkeit ist. Die Grenzfläche 10 und die fiktive Ebene 22 schließen somit einen Winkel θ ein, der im Wesentlichen 180° ist. Die Grenzfläche 10 in oder an der unteren Außenwandung 11a angeordnet. Die Platine 13a, auf welcher die zumindest eine Strahlungsquelleneinrichtung 5 und die zumindest eine Detektionseinrichtung 7 angeordnet sind ist im Wesentlichen parallel zu der Grenzfläche 10 angeordnet.

In Figur 5 ist ein Ausschnitt dargestellt, der das Prisma 12, die Trägereinrichtung 13 mit der zumindest einen Strahlungsquelleneinrichtung 5 und der zumindest einen Detektionseinrichtung 7 sowie den Strahlengängen der emittierten elektromagnetischen Strahlung 6 und der reflektierten elektromagnetischen Strahlung 8. Der Winkel $\xi$ zwischen der emittierten elektromagnetischen Strahlung 6 und der zweiten Seitenfläche 12b des Prismas 12 kann 90° betragen. Denkbar sind jedoch auch anderweitige Winkelwerte. Der Einfallswinkel $\alpha$ hängt ab von dem jeweiligen Material des Prismas beziehungsweise des Brechungsindexes n dieses Materials.

In Figur 8 ist die Reflektivität in Abhängigkeit von dem Einfallswinkel $\alpha$ (unpolarisierte Strahlung) für verschiedene Materialien des Reflexionselements 9 dargestellt. In Figur a) beträgt der Brechungsindex des Materials $n_1$ = 1,45. In Figur b) beträgt der Brechungsindex des Materials $n_1$ = 1,65. In Figur c) beträgt der Brechungsindex des Materials $n_1$ = 1,55. In den Graphen ist weiterhin die Winkelabhängigkeit der Totalreflektion in einem ungefüllten Zustand, bei dem das Fluid an der Grenzfläche 10 Luft ist und einem befüllten Zustand, bei dem das Fluid an der Grenzfläche 10 die Flüssigkeit ist. Im nicht befüllten Zustand beträgt bei $n_1$ = 1,45 der Grenzwinkel $\alpha_T$ ca. 43° bei $n_1$ = 1,65 der Grenzwinkel $\alpha_T$ ca. 37° und bei $n_1$ = 1,5 der Grenzwinkel $\alpha_T$ ca. 41°.

Die zumindest eine Strahlungsquelleneinrichtung 5 weist einen Emissionswinkel $\beta_E$ auf. Der Emissionswinkel $\beta_E$ beschreibt den Bereich, in welchem sich die elektromagnetische Strahlung 6, ausgehend von der zumindest einen Strahlungsquelleneinrichtung 5 ausbreitet. Die zumindest eine Detektionseinrichtung weist einen Akzeptanzwinkel $\beta_A$ auf. Der Akzeptanzwinkel $\beta_A$ beschreibt den Bereich, in welchem sich die elektromagnetische Strahlung zu der zumindest einen Detektionseinrichtung hin ausbreitet. Weiterhin ist der zumindest einen Strahlungsquelleneinrichtung 5 und der zumindest einen Detektionseinrichtung 7 eine zentrale Strahlrichtung 6a, 8a zugeordnet.

Die zentrale Strahlrichtung 6a der zumindest einen Strahlungsquelleneinrichtung 5 und/oder die zentrale Strahlrichtung 8a der zumindest einen Detektionseinrichtung 7 erstrecken sich vorzugsweise nicht senkrecht zu dem plattenartigen Element 13a. Hierdurch kann ein Einfall der elektromagnetischen Strahlung 6 mit dem vorgegebenen Einfallswinkel $\alpha$ und eine Detektion der reflektierten elektromagnetischen Strahlung 8 bei lediglich einer Grenzfläche 10 ermöglicht werden.

In Figur 9 ist eine Ausführungsform dargestellt, bei welcher sowohl die zentrale Strahlrichtung 6a der zumindest einen Strahlungsquelleneinrichtung 5 als auch die zentrale Strahlrichtung 8a der zumindest einen Detektionseinrichtung 7 sich nicht senkrecht zu dem plattenartigen Element 13a erstrecken. Selbstverständlich sind Ausführungsformen denkbar, bei welchen lediglich die zumindest eine Strahlungsquelleneinrichtung 5 oder die zumindest eine einen Detektionseinrichtung 7 eine zentrale Strahlrichtung 6a, 8a aufweisen, welche sich nicht senkrecht zu dem plattenartigen Element 13a erstreckt. Um eine solche zentrale Strahlrichtung 6a, welche sich nicht senkrecht zu dem plattenartigen Element 13a erstreckt zu ermöglichen, kann beispielsweise die zumindest eine Strahlungsquelleneinrichtung 5 zumindest eine Strahlungsquelle 5a, welche als ein Bauteil mit gebogenen Drahtanschlüssen 5b ausgebildet ist: Alternativ oder kumulativ kann die zumindest eine Detektionseinrichtung 7 ein Sensorelement 7a umfassen, welches als ein Bauteil mit gebogenen Drahtanschlüssen 7b ausgebildet ist. Die zentrale Strahlrichtung 6a der zumindest einen Strahlungsquelleneinrichtung 5 und die Platine 13a schließen somit einen Winkel $\phi_S$ ein, welcher kleiner als 90° ist. Die zentrale Strahlrichtung 8a der zumindest einen Detektionseinrichtung 7 und die Platine 13a schließen somit einen Winkel $\phi_D$ ein, welcher kleiner als 90° ist. Aus der Figur ist auch gut ersichtlich, dass das jeweilige Bauteil nicht parallel zu der Platine 13a und somit mit einem gewissen Abstand zu der Oberfläche der Platine an dieser befestigt ist. Die jeweiligen Drahtanschlüsse 5b, 7b werden mittels der Durchstecktechnologie an der Platine befestigt. Ein weitere Möglichkeit eine zumindest eine Strahlungsquelleneinrichtung 5 mit einer zentralen Strahlrichtung 6a, welche sich nicht senkrecht zu dem plattenartigen Element 13a erstreckt zu ermöglichen ist die Verwendung von Sidelooker-LED..

In Figur 10 ist eine Ausführungsform dargestellt, bei welcher lediglich die zentrale Strahlrichtung 6a der zumindest einen Strahlungsquelleneinrichtung 5 sich nicht senkrecht zu dem plattenartigen Element 13a erstreckt. Die zentrale Strahlrichtung 8a der zumindest einen Detektionseinrichtung 7 erstreckt sich im Wesentlich senkrecht zu dem plattenartigen Element 13a. Die zentrale Strahlrichtung 6a der zumindest einen Strahlungsquelleneinrichtung 5 ist nach dieser Ausführungsform im Wesentlichen parallel zu dem plattenartigen Element 13a. Der Winkel $\phi_S$ ist somit im Wesentlichen 0°. Das plattenartige Element 13a ist jedoch derart relativ zu dem Container angeordnet, dass die Grenzfläche 10 schräg zu dieser verläuft. Ein Winkel zwischen einer Ebene, in welcher sich die Grenzfläche 10 befindet und zwischen einer Ebene, in welcher sich das plattenartige Element 13a befindet, ist somit kleiner als 90° und größer als 0° vorzugsweise liegt dieser Winkel in einem Bereich zwischen 20° und 70°. Nach dieser Ausführungsform ist zumindest eine Strahlungsquelle 5a der Strahlungsquelleneinrichtung 5 als ein Bauteil mit gebogenen Drahtanschlüssen 5b ausgebildet. Die Strahlungsquelle 5a ist nicht parallel zu der Platine 13a und somit mit einem gewissen Abstand zu der Oberfläche der Platine an dieser befestigt ist. Die jeweiligen Drahtanschlüsse 5b werden mittels der Durchstecktechnologie an der Platine befestigt.

In Figur 15 ist eine alternative Ausführungsform dargestellt. Hier weist die Platine 13, 13b, 13c einen ersten Abschnitt 14 auf, auf oder an welchem die zumindest eine Strahlungsquelleneinrichtung 5 angeordnet ist. Weiterhin weist die Platine 13, 13b, 13c einen zweiten Abschnitt 15 auf, auf oder an welchem die zumindest eine Detektionseinrichtung 7 angeordnet ist. Dabei schließen der erste Abschnitt 14 und der zweite Abschnitt 15 einen Winkel γ ein, welcher kleiner als 180° ist. Eine solche Ausgestaltung kann durch eine gebogene Platine 13b oder eine flexible Platine 13c ermöglicht werden. Die Platine 13b, 13c ist derart relativ zu dem Container 3 angeordnet, dass die Grenzfläche 10 schräg sowohl zu dem ersten Abschnitt 14 als auch zu dem zweiten Abschnitt 15 verläuft. Ein Winkel zwischen einer Ebene, in welcher sich die Grenzfläche 10 befindet und zwischen einer Ebene, in welcher sich ein Abschnitt 15 befindet, ist somit kleiner als 90° und größer als 0° vorzugsweise liegt dieser Winkel in einem Bereich zwischen 20° und 70°. Die zumindest eine Strahlungsquelleneinrichtung 5 und die zumindest eine Detektionseinrichtung 7 können somit im Wesentlichen parallel zu einer Oberfläche des jeweiligen Abschnitts angeordnet sein.

Nach einer weiteren Ausführungsform ist die zumindest eine Strahlungsquelleneinrichtung 5 derart ausgewählt, dass dies einen großen einen Emissionswinkel $\beta_E$ aufweist. Bevorzugt ist die zumindest eine Strahlungsquelleneinrichtung 5 annähernd ein Lambert Strahler. Alternativ oder kumulativ ist die zumindest eine Detektionseinrichtung 7 derart ausgewählt, dass diese einen großen Akzeptanzwinkel βa, aufweist. Vorzugsweise ist zumindest eine Detektionseinrichtung 7 annähernd ein Lambert Detektor. Eine derartige Strahlungsquelleneinrichtung 5 und eine derartige Detektionseinrichtung 7 sind in der Ausführungsform nach Figur 11 vorgesehen. Die zumindest eine Strahlungsquelleneinrichtung 5 ist derart relativ zu der Grenzfläche 10 angeordnet, dass lediglich ein Teil der elektromagnetischen Strahlung 6 innerhalb des Emissionswinkels $\beta_E$ auf die Grenzfläche 10 trifft. Weiterhin ist die zumindest eine Detektionseinrichtung 7 derart relativ zu der Grenzfläche 10 angeordnet, dass lediglich ein Teil der reflektierten elektromagnetischen Strahlung 8 innerhalb des Akzeptanzwinkels ($\beta_A$) liegt. Durch den großen Emissionswinkel $\beta_E$ trifft ausreichend elektromagnetische Strahlung 6 auf die Grenzfläche 10. Durch den großen Akzeptanzwinkel $\beta_A$ trifft ausreichend reflektierte elektromagnetische Strahlung 8 auf die zumindest eine Detektionseinrichtung 7, das eine effektive Detektion ermöglicht ist. Die Platine 13a ist nach dieser Ausführungsform im Wesentlichen parallel zu der Grenzfläche 10. Ferner sind die die zumindest eine Strahlungsquelleneinrichtung 5 und die zumindest eine Detektionseinrichtung 7 im Wesentlichen parallel zu der Platine 13a.

Nach einer Ausführungsform zumindest eine erste Blendeneinrichtung vorgesehen, welche die auf die Grenzfläche 10 gerichtete elektromagnetische Strahlung 6 räumlich begrenzt. Alternativ oder kumulativ kann zumindest eine zweite Blendeneinrichtung vorgesehen sein, welche die reflektierte elektromagnetische Strahlung 8 räumlich begrenzt. In Figur 12 ist eine Ausführungsform dargestellt, welche im Wesentlichen der Ausführungsform nach Figur 11 entspricht. Weiterhin ist eine dritte Blendeneinrichtung 16 vorgesehen, die eine Kombination einer ersten Blendeneinrichtung und einer zweite Blendeneinrichtung ist. Durch die dritte Blendeneinrichtung 16 wird somit sowohl die auf die Grenzfläche 10 gerichtete elektromagnetische Strahlung 6 als auch die reflektierte elektromagnetische Strahlung 8 räumlich begrenzt. Vorliegend ist die dritte Blendeneinrichtung 16 V-artig ausgebildet und ist an oder nahe dem Prisma 12 sowie zwischen zumindest einen Strahlungsquelleneinrichtung 5 und der zumindest einen Detektionseinrichtung 7 angeordnet.

In Figur 13 ist eine Ausführungsform dargestellt, welche im Wesentlichen der Ausführungsform nach Figur 11 entspricht. Weiterhin ist zwischen der zumindest einen Strahlungsquelleneinrichtung 5 und der Grenzfläche 10 ein erstes Fensterelement 17 angeordnet. Alternativ oder kumulativ kann zwischen der Grenzfläche 10 und der zumindest einen Detektionseinrichtung 7 ein zusätzliches zweites Fensterelement 18 angeordnet sein. Denkbar wäre auch, dass die beiden Fensterelemente 17, 18 zu einem Element kombiniert sind. In Figur 13 ist ein solches kombiniertes Element dargestellt. Dieses ist V-artig ausgebildet und ist an oder nahe dem Prisma 12 sowie zwischen zumindest einer Strahlungsquelleneinrichtung 5 und der zumindest einen Detektionseinrichtung 7 angeordnet.

In Figur 14 ist eine Ausführungsform dargestellt, welche im Wesentlichen der Ausführungsform nach Figur 11 entspricht. Weiterhin ist auf oder nahe der zumindest einen Strahlungsquelleneinrichtung 5 ein erstes optisches Element 19 angeordnet. Alternativ oder kumulativ kann auf oder nahe der zumindest einen Detektionseinrichtung 7 ein zweites optisches Element 20 angeordnet sein. Das erste optische Element 19 und/oder das zweite optische Element 20 kann beispielsweise ein Prisma oder eine Linse sein.

Das ein Reflexionselement 9 kann vielfältig ausgestaltet sein. Das Reflexionselement 9 kann beispielsweise mehrere Abschnitte 9a, 9b aufweisen, welche aus unterschiedlichen Materialien bestehen. Dies ist In Fig 16 dargestellt. Ein erster Abschnitt 9a besteht dabei aus einem ersten Material und ein zweiter Abschnitt 9b besteht aus einem zweiten Material. Nach der Ausführungsform gemäß Figur 17 weist das Reflexionselement 9 eine Abrundung auf, welche der Grenzfläche 10 gegenüberliegend ist.

Nach der Ausführungsform gemäß Figur 18 weist das Reflexionselement 9 eine zusätzliche Grenzfläche 23 auf, welche jedoch nicht mit dem in dem Container 3 sich befindlichen Fluid sei es Luft oder die Flüssigkeit in Kontakt ist. Vielmehr ist diese zusätzliche Grenzfläche 23 der Grenzfläche 10 gegenüberliegend angeordnet. Demnach können in dem Reflexionselement 9 mehrere Reflexionen der elektromagnetischen Strahlung 6 stattfinden bevor diese aus Reflexionselement 9 austritt.

Nach der Ausführungsform gemäß den Figuren 19 und 20 weist das Reflexionselement 9 einen Randbereich 24 auf, welcher aus einer Vielzahl von Segmenten 25 besteht. Vorzugsweise sind diese Segmente 25 winkelartig ausgebildet. Der Randbereich ist selbstverständlich transparent für die elektromagnetische Strahlung 6, 8.

Nach einer Ausführungsform ist zumindest eine Strahlungsleitungseinrichtung 21 vorgesehen. Dabei wird die elektromagnetische Strahlung 6 der zumindest einen Strahlungsquelleneinrichtung 21 abschnittsweise in der Strahlungsleitungseinrichtung 21 geleitet. Alternativ oder kumulativ wird die an der Grenzfläche reflektierte elektromagnetische Strahlung 8 abschnittsweise in der Strahlungsleitungseinrichtung 21 geleitet. In Figur 21 ist beispielsweise eine Strahlungsleitungseinrichtung 21 vorgesehen. In dieser Strahlungsleitungseinrichtung 21 wird elektromagnetische Strahlung 6 der einen Strahlungsquelleneinrichtung 5 entlang eines Abschnitts des Strahlengangs, vorliegend der senkrechte Abschnitt geleitet.

Nach der Ausführungsform gemäß den Figur 21 ist eine Strahlungsleitungseinrichtung 21 vorgesehen. Die Strahlungsleitungseinrichtung 21 ist stabartig ausgebildet, oberhalb der der Strahlungsquelleneinrichtung 5 angeordnet und im Wesentlichen senkrecht zu der Strahlungsquelleneinrichtung 5 beziehungsweise der Platine 13a. Die Strahlungsleitungseinrichtung 21 weist ein distales Ende 26 auf, wobei die Oberflächen 26a der distalen Enden 26 jeweils um 45 Grad zur einer Längsrichtung X1 der Strahlungsleitungseinrichtung 21 abgeschrägt sind. Die sich in der Strahlungsleitungseinrichtung 21 in Längsrichtung X1 ausbreitende, erste elektromagnetische Strahlung 6 wird durch Totalreflexion an der ersten Oberfläche 26a des ersten distalen Endes 26 der Strahlungsleitungseinrichtung 21 bevorzugt um 90 Grad abgelenkt und zu der Grenzfläche 10 geleitet. Die reflektierte elektromagnetische Strahlung 8 gelang direkt zu der zumindest einen Detektionseinrichtung 7. In dieser Ausführungsform sind zwei Platinen 13a vorgesehen, wobei die zumindest eine Strahlungsquelleneinrichtung 5 und die zumindest eine Detektionseinrichtung 7 jeweils auf einer unterschiedlichen Platine angeordnet sind.

Nach der Ausführungsform gemäß Figur 22 ist eine Mehrzahl von Containern 3 zum Aufbewahren einer Flüssigkeit vorgesehen ist. Dabei ist lediglich eine Strahlungsquelleneinrichtung 5 vorgesehen. Ferner ist eine Mehrzahl an Strahlungsleitungseinrichtungen 21 vorgesehen, welche elektromagnetische Strahlung 6 der Strahlungsquelleneinrichtung 5 zu den jeweiligen Grenzflächen 10 der Container 3 leiten. Vorliegend sind zwei Container 3 und zwei Strahlungsleitungseinrichtungen 21 vorgesehen. Die beiden Container sind im Wesentlichen entlang einer Breitenachse Y1 gegenüberliegend angeordnet. Die Strahlungsleitungseinrichtungen 21 sind oberhalb der lediglich einen Strahlungsquelleneinrichtung 5 angeordnet und im Wesentlichen senkrecht zu der Strahlungsquelleneinrichtung 5 beziehungsweise der Platine 13a. Die Strahlungsleitungseinrichtungen 21 sind analog zu der Ausführungsform nach Figur 21 ausgebildet. Allerdings sind die Strahlungsleitungseinrichtungen 21 derart nebeneinanderliegend angeordnet, dass die Oberflächen 26a der distalen Enden 26 jeweils gegenüberliegend ist. Die elektromagnetische Strahlung der beiden Strahlungsleitungseinrichtungen 21 wird somit entlang der Breitenachse Y1 in entgegengesetzte Richtungen gelenkt. Weiterhin ist eine Mehrzahl an Detektionseinrichtungen 7 vorgesehen. Jedem Container 3 ist eine Detektionseinrichtung 7 zugeordnet. Die reflektierte elektromagnetische Strahlung wird somit von der Grenzfläche 10 jedes Containers zu der jeweilig zugeordneten Detektionseinrichtung 7 geleitet.

In Figur 23 ist schematisch ein Haushaltsgerät 2 mit einem System 1 zur Aufbewahrung von Flüssigkeiten dargestellt. Das Haushaltsgerät weist weiterhin eine Steuerungseinrichtung 27 auf, welche die zumindest eine Strahlungsquelleneinrichtung 5 ansteuert und die Sensordaten der zumindest einen Detektionseinrichtung 7 empfängt und verarbeitet. In Abhängigkeit von dem detektierte Füllstand könnte beispielsweise eine Anzeigeeinrichtung 28 angesteuert werden.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer, in einzelnen oder in unterschiedlichen Figuren gezeigter Merkmale ergeben können.

**Bezugszeichenliste**

1 System
2 Haushaltsgerät
3 Container
4 Füllstandsmessvorrichtung
5 Strahlungsquelleneinrichtung
5a Strahlungsquelle
5b gebogene Drahtanschlüsse
6 emittierte elektromagnetische Strahlung
6a zentrale Strahlrichtung der emittierten elektromagnetischen Strahlung
7 Detektionseinrichtung
7a Sensorelement
7b gebogene Drahtanschlüsse

| | |
|---|---|
| 8 | reflektierte elektromagnetische Strahlung |
| 8a | zentrale Strahlrichtung der reflektierten elektromagnetischen Strahlung |
| 9 | Reflexionselement |
| 9a | erster Abschnitt des Reflexionselements |
| 9b | zweiter Abschnitt des Reflexionselements |
| 10 | Grenzfläche |
| 11 | Außenwandung des Containers |
| 11a | untere Außenwandung |
| 11b | seitliche Außenwandung |
| 12 | optisches Prisma |
| 12a | erste Seitenfläche des optischen Prismas |
| 12b | zweite Seitenfläche des optischen Prismas |
| 12c | dritte Seitenfläche des optischen Prismas |
| 13 | Trägereinrichtung |
| 13a | plattenartiges Element/ Platine |
| 13b | gebogene Platine |
| 13c | flexible Platine |
| 14 | erster Abschnitt der Platine |
| 15 | zweiter Abschnitt der Platine |
| 16 | Blendeneinrichtung |
| 17 | erstes Fensterelement |
| 18 | zweites Fensterelement |
| 19 | erstes optisches Element |
| 20 | zweites optisches Element |
| 21 | Strahlungsleitungseinrichtung |
| 22 | fiktive Ebene parallel zu dem Pegel der Flüssigkeit |
| 23 | zusätzliche Grenzfläche |
| 24 | Randbereich |
| 25 | Segmente |
| 26 | distale Enden der Strahlungsleitungseinrichtung |
| 26a | Oberflächen der distale Enden |
| 27 | Steuerungseinrichtung |
| 28 | Anzeigeeinrichtung |
| $\alpha$ | Einfallswinkel |
| $\alpha_T$ | Grenzwinkel |
| $\beta_E$ | Emissionswinkel der Strahlungsquelleneinrichtung |
| $\beta_A$ | Akzeptanzwinkel der Detektionseinrichtung |
| $\gamma$ | Winkel zwischen ersten Abschnitt und zweiten Abschnitt der Platine |
| $\theta$ | Winkel zwischen Fensterelement und Pegel der Flüssigkeit |
| $\xi$ | Winkel zwischen der emittierten elektromagnetische Strahlung und der zweiten Seitenfläche |
| $\phi_s$ | Winkel zwischen zentraler Strahlrichtung der zumindest einen Strahlungsquelleneinrichtung und Platine |
| $\phi_D$ | Winkel zwischen zentraler Strahlrichtung der zumindest einen Detektionseinrichtung und Platine |
| X | Längsachse des Containers |
| Y | Breitenachse des Containers |
| Z | Höhenachse des Containers |
| X' | Längsachse des Prismas |
| Y' | Breitenachse des Prismas |
| Z' | Höhenachse des Prismas |

**Patentansprüche**

1. System (1) zur Aufbewahrung von Flüssigkeiten, insbesondere für ein Haushaltsgerät (2), umfassend zumindest einen Container (3) zum Aufbewahren einer Flüssigkeit und zumindest einer Füllstandsmessvorrichtung (4), **dadurch gekennzeichnet, dass** die Füllstandsmessvorrichtung (4) zumindest eine Strahlungsquelleneinrichtung (5), welche elektromagnetische Strahlung (6) emittiert und zumindest eine Detektionseinrichtung (7) für elektromagnetische Strahlung (8) umfasst, wobei der zumindest eine Container (3) ein Reflexionselement (9) aufweist, welches lediglich eine Grenzfläche (10) mit einem in dem Container (3) befindlichen Fluid aufweist.

2. System (1), nach Anspruch 1 **dadurch gekennzeichnet, dass** die elektromagnetischen Strahlung (6) der zumindest einen Strahlungsquelleneinrichtung (5) in einem vorbestimmten Einfallswinkel $\alpha$ oder einen vorbestimmten Einfallswinkelbereich auf die Grenzfläche (10), wobei in einem ersten Zustand des Systems der Container (3) nicht mit der Flüssigkeit befüllt ist, wobei das Fluid Luft ist, wobei in dem ersten Zustand zumindest ein Anteil der elektromagnetischen Strahlung (6) an der lediglich einen Grenzfläche totalreflektiert wird und von der zumindest einen Detektionseinrichtung detektiert wird.

3. System (1) nach einem der Ansprüche 1 oder 2 **dadurch gekennzeichnet, dass** das Reflexionselement (9) in oder an einer Außenwandung (11) des zumindest einen Containers (3) angeordnet ist, wobei die Grenzfläche (10) planar, gewölbt, parabolisch oder als Kugelabschnitt ausgebildet ist, wobei ein optisches Element in die Grenzfläche (10) integriert ist, wobei das Reflexionselement aus Glas oder einem Polymer besteht.

4. System (1) nach einem der vorhergehenden Ansprüche **dadurch gekennzeichnet, dass** das Reflexionselement (9) ein optisches Prisma (12) umfasst, wobei eine erste Seitenfläche (12a) des optischen Prismas (12) die lediglich eine Grenzfläche (10) mit einem in dem Container (3) befindlichen Fluid ausbildet.

5. System (1) nach einem der Ansprüche 2 bis 4 **dadurch gekennzeichnet, dass** das Reflexionselement (9) derart an oder in der Außenwandung (11) des zumindest einen Containers (3) angeordnet ist, dass die Grenzfläche (10) schräg zu einer fiktiven Ebene (22) verläuft, welche parallel zu einem Pegel der Flüssigkeit in dem Container ist.

**6.** System (1) nach einem der Ansprüche 2 bis 4 **dadurch gekennzeichnet, dass** das Reflexionselement (9) derart an oder in der Außenwandung (11) des zumindest einen Containers (3) angeordnet ist, dass die Grenzfläche (10) im Wesentlichen parallel zu einem Pegel der Flüssigkeit in dem Container ist.

**7.** System (1) nach einem der vorhergehenden Ansprüche **dadurch gekennzeichnet, dass** die Strahlungsquelleneinrichtung (5) zumindest eine Strahlungsquelle (5a) umfasst, wobei die zumindest eine Strahlungsquelle (5a) eine LED, ein Laser, oder eine Superlumineszenzdiode (SLED) ist, wobei die zumindest eine Strahlungsquelleneinrichtung (5) und die zumindest eine Detektionseinrichtung (7) auf einer gemeinsamen Trägereinrichtung (13) angeordnet sind, wobei die Trägereinrichtung (13) zumindest ein plattenartiges Element (13a) umfasst, wobei das plattenartige Element (13) eine Platine ist.

**8.** System (1) nach Anspruch 7 **dadurch gekennzeichnet, dass** der zumindest einen Strahlungsquelleneinrichtung (5) und der zumindest einen Detektionseinrichtung (7) eine zentrale Strahlrichtung (6a, 8a) zugeordnet ist, wobei sich die zentrale Strahlrichtung (6a) der zumindest einen Strahlungsquelleneinrichtung (5) und/oder die zentrale Strahlrichtung (8a) der zumindest einen Detektionseinrichtung (7) nicht senkrecht zu dem plattenartigen Element (13a) erstreckt,

**9.** System (1) nach Anspruch 8 **dadurch gekennzeichnet, dass** die zumindest eine Strahlungsquelleneinrichtung (5) zumindest eine Strahlungsquelle (5a) aufweist, welche als ein Bauteil mit gebogenen Drahtanschlüssen (5b) ausgebildet ist, wobei die zumindest eine Detektionseinrichtung (7) ein Sensorelement (7a) aufweist, welches als ein Bauteil mit gebogenen Drahtanschlüssen (7b) ausgebildet ist.

**10.** System (1) nach Anspruch 6 bis 8 **dadurch gekennzeichnet, dass** die Trägereinrichtung (13) eine gebogene Platine (13b) oder eine flexible Platine (13c) umfasst, wobei die Platine (13b, 13c) einen ersten Abschnitt (14) aufweist, auf oder an welchem die zumindest eine Strahlungsquelleneinrichtung (5) angeordnet ist, wobei die Platine (13b, 13c) einen zweiten Abschnitt (15) aufweist, auf oder an welchem die zumindest eine Detektionseinrichtung (7) angeordnet ist, wobei der erste Abschnitt (14) und der zweite Abschnitt (15) einen Winkel ($\gamma$) einschließen, wobei der Winkel ($\gamma$) kleiner als 180° ist.

**11.** System (1) nach einem der vorhergehenden Ansprüche **dadurch gekennzeichnet, dass** die zumindest eine Strahlungsquelleneinrichtung (5) einen Emissionswinkel ($\beta_E$) und die zumindest eine Detektionseinrichtung (7) einen Akzeptanzwinkel ($\beta_A$) aufweist, wobei die zumindest eine Strahlungsquelleneinrichtung (5) derart relativ zu der Grenzfläche (10) angeordnet ist, dass lediglich ein Teil der elektromagnetischen Strahlung (6) innerhalb des Emissionswinkels ($\beta_E$) auf die Grenzfläche (10) trifft, wobei die zumindest eine Detektionseinrichtung (7) derart relativ zu der Grenzfläche (10) angeordnet ist, dass lediglich ein Teil der reflektierten der elektromagnetischen Strahlung (8) innerhalb des Akzeptanzwinkels ($\beta_A$) liegt, wobei die zumindest eine Strahlungsquelleneinrichtung (5) annähernd ein Lambert Strahler ist und die zumindest eine Detektionseinrichtung (7) annähernd ein Lambert Detektor ist, wobei der halbe Emissionswinkel ($\beta_E$) größer oder gleich 45° ist, wobei der halbe Akzeptanzwinkel ($\beta_A$) größer oder gleich 45° ist.

**12.** System (1) nach Anspruch 10 **dadurch gekennzeichnet, dass** zumindest eine erste Blendeneinrichtung vorgesehen ist, welche die auf die Grenzfläche (10) gerichtete elektromagnetische Strahlung (6) räumlich begrenzt, wobei zumindest eine zweite Blendeneinrichtung vorgesehen ist, welche die reflektierte elektromagnetische Strahlung (8) räumlich begrenzt.

**13.** System (1) nach einem der vorhergehenden Ansprüche **dadurch gekennzeichnet, dass** zwischen der zumindest einen Strahlungsquelleneinrichtung (5) und der Grenzfläche (10) ein erstes Fensterelement (17) angeordnet ist, wobei zwischen der Grenzfläche (10) und der zumindest einen Detektionseinrichtung (7) ein zweites Fensterelement (18) angeordnet ist.

**14.** System (1) nach einem der vorhergehenden Ansprüche **dadurch gekennzeichnet, dass** auf oder nahe der zumindest einen Strahlungsquelleneinrichtung (5) ein erstes optisches Element (19) angeordnet ist, wobei auf oder nahe der zumindest einen Detektionseinrichtung (7) ein zweites optisches Element (20) angeordnet ist, wobei das erste optische Element (19) und/oder das zweite optische Element (20) ein Prisma oder eine Linse ist.

**15.** System (1) nach einem der vorhergehenden Ansprüche **dadurch gekennzeichnet, dass** zumindest eine Strahlungsleitungseinrichtung (21) vorgesehen ist, wobei die elektromagnetische Strahlung (6) der zumindest einen Strahlungsquelleneinrichtung (21) abschnittsweise in der Strahlungsleitungseinrichtung (21) geleitet wird, wobei die an der Grenzfläche reflektierte elektromagnetische Strahlung (8) abschnittsweise in der Strahlungsleitungseinrichtung (21) geleitet wird.

16. System (1) nach einem der Ansprüche 1 bis 5 **dadurch gekennzeichnet, dass** eine Mehrzahl von Containern (3) zum Aufbewahren einer Flüssigkeit vorgesehen ist, wobei lediglich eine Strahlungsquelleneinrichtung (5) vorgesehen ist, wobei eine Mehrzahl an Strahlungsleitungseinrichtungen (21) vorgesehen ist, welche elektromagnetische Strahlung (6) der Strahlungsquelleneinrichtung (5) zu den jeweiligen Grenzflächen (10) der Container (3) leiten, wobei eine Mehrzahl an Detektionseinrichtungen (7) vorgesehen ist, wobei jedem Container (3) eine Detektionseinrichtung (7) zugeordnet ist.

17. Haushaltsgerät (2) mit einem System (1) zur Aufbewahrung von Flüssigkeiten nach einem der vorhergehenden Ansprüche.

Fig. 1

Fig. 2

Fig. 3

Fig. 4

Fig. 5

Fig. 6

Fig. 7

a)

b)

c)

Fig. 8

12b

10, 12a

12, 9

3

12c

6

8

5b

13, 13a

5, 5a

ΦD

7, 7a

7a

ΦS

Fig. 9

9, 12

10, 12a

12b

3

6

5, 5a

ΦS

8

5b

13, 13a

7, 7a

12c

Fig. 10

Fig. 11

Fig. 12

9, 12

10, 12a

3

13, 13a

5, 5a

17

18

7, 7a

Fig. 13

10, 12a

9, 12

3

19

20

13, 13a

5, 5a

7, 7a

Fig. 14

Fig. 15

Fig. 16

Fig. 17

Fig. 18

Fig. 19

Fig. 20

Fig. 21

Fig. 22

Fig. 23

**Europäisches Patentamt**
**European Patent Office**
**Office européen des brevets**

## EUROPÄISCHER RECHERCHENBERICHT

**Nummer der Anmeldung**

EP 24 17 6722

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 411 773 B1 (ELBI INT SPA [IT]) 7. November 2018 (2018-11-07) | 1-5, 7-10, 14-17 | INV. G01F23/292 |
| Y | * Abbildungen 4, 5 * <br> * Absatz [0001] - Absatz [0004] * <br> * Absätze [0020], [0024], [0025] * <br> * Absatz [0026] - Absatz [0031] * <br> ----- | 6,11-13 | |
| X | DE 32 43 839 A1 (KROMBERG & SCHUBERT [DE]) 30. Mai 1984 (1984-05-30) <br> * Abbildung 10 * <br> ----- | 1 | |
| Y | EP 0 228 217 A1 (LUCAS ELECT ELECTRON SYST [GB]) 8. Juli 1987 (1987-07-08) <br> * Abbildungen 5, 6 * <br> ----- | 6,11-13 | |
| X | GB 1 553 642 A (TOKYO SHIBAURA ELECTRIC CO) 26. September 1979 (1979-09-26) <br> * Abbildung 1 * <br> ----- | 1 | |

**RECHERCHIERTE SACHGEBIETE (IPC)**

G01F

Der vorliegende Recherchenbericht wurde für alle Patentansprüche erstellt

| Recherchenort | Abschlußdatum der Recherche | Prüfer |
|---|---|---|
| Den Haag | 8. Oktober 2024 | Nierhaus, Thomas |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
.............................................................................................
& : Mitglied der gleichen Patentfamilie, übereinstimmendes
Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 17 6722

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-10-2024

| Im Recherchenbericht angeführtes Patentdokument | | Datum der Veröffentlichung | Mitglied(er) der Patentfamilie | | Datum der Veröffentlichung |
|---|---|---|---|---|---|
| EP 2411773 | B1 | 07-11-2018 | CN | 102365533 A | 29-02-2012 |
| | | | EP | 2411773 A1 | 01-02-2012 |
| | | | IT | 1398388 B1 | 22-02-2013 |
| | | | KR | 20120002604 A | 06-01-2012 |
| | | | KR | 20170031257 A | 20-03-2017 |
| | | | US | 2012019838 A1 | 26-01-2012 |
| | | | WO | 2010109416 A1 | 30-09-2010 |
| DE 3243839 | A1 | 30-05-1984 | KEINE | | |
| EP 0228217 | A1 | 08-07-1987 | EP | 0228217 A1 | 08-07-1987 |
| | | | US | 4788444 A | 29-11-1988 |
| GB 1553642 | A | 26-09-1979 | KEINE | | |

EPO FORM P0461

Für nähere Einzelheiten zu diesem Anhang : siehe Amtsblatt des Europäischen Patentamts, Nr.12/82